# FASCICULE DE BREVET EUROPEEN

(11) **EP 4 463 618 B1**
(45) Date de publication et mention de la délivrance du brevet: **04.03.2026**
(21) Numéro de dépôt: 23700600.2
(22) Date de dépôt: 06.01.2023
(51) Int. Cl.: F01M 11/04, F01D 25/20

(54) **DISPOSITIF APTE A ETRE MONTE SUR UN RESERVOIR D'HUILE D'UNE TURBOMACHINE D'AERONEF, ENSEMBLE DE FOURNITURE D'HUILE, ET PROCEDE D'UTILISATION ASSOCIES**
VORRICHTUNG ZUR MONTAGE AUF EINEM ÖLRESERVOIR EINER FLUGZEUGTURBOMASCHINE, ZUGEHÖRIGE ÖLVERSORGUNGSANORDNUNG UND ZUGEHÖRIGES VERFAHREN ZUR VERWENDUNG
DEVICE SUITABLE FOR BEING MOUNTED ON AN OIL RESERVOIR OF AN AIRCRAFT TURBOMACHINE, ASSOCIATED OIL SUPPLY ASSEMBLY, AND ASSOCIATED METHOD OF USE

(30) Priorité: 13.01.2022 BE 202205019
(43) Date de publication de la demande: 20.11.2024
(73) Titulaire: Safran Aero Boosters, 4041 Herstal (BE)
(72) Inventeur: BOUGELET, Stéphane Alain Luc Ghislain, 4041 Herstal (BE); LAMBION, Charlotte Michelle Frédérique, 4041 Herstal (BE)
(74) Mandataire: Gevers Patents
(86) Numéro de dépôt international: PCT/EP2023/050221
(87) Numéro de publication internationale: WO 2023/135060

(56) Documents cités:
- US-A- 4 286 727
- US-A- 4 886 182
- US-A- 5 234 122
- US-A1- 2014 231 437
- US-A1- 2018 320 569
- US-A1- 2021 003 051

## Description

### Domaine technique

La présente invention concerne un dispositif apte à être monté sur un réservoir d'huile d'une turbomachine d'aéronef. La présente invention concerne également un ensemble de fourniture d'huile comprenant au moins un tel dispositif. La présente invention concerne en outre un procédé d'utilisation d'un tel dispositif.

### Art antérieur

Les moteurs d'avion connus comprennent de nombreux composants qui doivent être lubrifiés afin de fonctionner de manière efficace. En tant que tels, les moteurs comprennent des réservoirs d'huile contenant de l'huile destinée à lubrifier des composants des moteurs, tels que des boîtes de vitesses. EP 3 399 164 décrit un tel réservoir d'huile. US 2021/003051 A1 décrit un appareil de remplissage d'huile de moteur d'avion comprenant un tube de remplissage configuré pour être reçu à travers une paroi d'un réservoir d'huile de sorte qu'une extrémité supérieure ouverte du tube de remplissage est accessible depuis l'extérieur du réservoir d'huile et qu'une extrémité inférieure du tube de remplissage est disposée à l'intérieur du réservoir d'huile. L'appareil comprend un capuchon pour se fixer de manière amovible à l'extrémité supérieure ouverte du tube de remplissage pour couvrir l'extrémité supérieure ouverte du tube de remplissage lorsque le réservoir d'huile est en cours d'utilisation, et pour être retiré du tube de remplissage afin de permettre l'ajout d'huile dans le réservoir d'huile via le tube de remplissage.

Afin de fournir de l'huile à un moteur, une personne verse généralement de l'huile dans le réservoir d'huile du moteur, via un adaptateur disposé sur l'entrée du réservoir d'huile. Afin d'assurer une bonne isolation fluidique du réservoir d'huile, l'adaptateur comprend deux étanchéités, une étanchéité primaire appelée « bouchon » entre l'adaptateur et l'extérieur de l'adaptateur, et une étanchéité secondaire appelée « flapper » entre l'adaptateur et le réservoir d'huile. Une cavité adaptateur se trouve entre ces deux étanchéités.

Lors d'un vol d'aéronef, la cavité adaptateur est mise en dépression. Lorsque l'aéronef est de retour au sol, il faut contrer cette dépression pour ouvrir le bouchon, ce qui peut rendre l'opération d'ouverture difficile.

### Résumé de l'invention

Un objectif de l'invention est d'aider à l'ouverture du bouchon d'un réservoir d'huile de turbomachine d'aéronef. En particulier, l'invention propose de contrer la dépression dans la cavité de l'adaptateur, et de permettre une ouverture de bouchon facile avec une force limitée.

A cet effet, l'invention a pour objet un dispositif apte à être monté sur un réservoir d'huile d'une turbomachine d'aéronef, comprenant :
- un canal situé entre une entrée de dispositif et une sortie de dispositif, la sortie de dispositif étant destinée à être raccordée au réservoir d'huile,
- un bouchon monté mobile sur l'entrée de dispositif et configuré pour prendre :
   ∘ une position de mise à l'air dans laquelle du fluide est apte à entrer dans le canal au travers de l'entrée de dispositif, et
   ∘ une position d'obturation dans laquelle le bouchon obture totalement l'entrée de dispositif ;

l'entrée de dispositif comprenant une saillie et en ce que le dispositif comprend un levier raccordé au bouchon ;
le levier comprenant un coude d'appui apte à entrer en appui sur la saillie et pivoter autour de la saillie entre une position de contact de saillie et une position de levage ;
le bouchon étant dans la position d'obturation lorsque le levier occupe sa position de contact de saillie,
le bouchon étant dans la position de mise à l'air lorsque le levier occupe sa position de levage ; et
le levier déplaçant le bouchon de sa position d'obturation à sa position de mise à l'air pendant son pivotage de la position de contact de saillie à la position de levage.

Selon un mode de réalisation, le levier est déplaçable entre une position de repos et la position de contact de saillie, le levier étant à l'écart de la saillie lorsqu'il occupe la position de repos, le bouchon étant à la position d'obturation lorsque le levier occupe la position de repos.

Selon un mode de réalisation, la saillie comprend un orifice, et le bouchon comprend un axe de fermeture apte à entrer dans l'orifice de sorte à bloquer le bouchon à sa position d'obturation ;
lorsque le levier occupe sa position de repos, l'axe de fermeture étant insérée dans l'orifice ;
lorsque le levier occupe sa position de contact de saillie, l'axe de fermeture étant à l'écart de l'orifice ; et
la rotation du levier de sa position de repos à sa position de contact de saillie étant configurée pour retirer l'axe de fermeture de l'orifice.

Selon un mode de réalisation, le levier est fixé sur l'axe de fermeture par un pivot de levier, le levier étant apte à pivoter autour du pivot de levier entre ses positions de repos et de contact de saillie.

Selon un mode de réalisation, le levier comprend un bras court s'étendant entre le coude d'appui et le pivot de levier, le bras court ayant une première longueur, et un bras long formant poignée et s'étendant sur une deuxième longueur à partir du coude d'appui, la deuxième longueur étant au moins trois fois plus grande, avantageusement cinq fois plus grande, que la première longueur entre le coude d'appui et le pivot de levier.

Selon un mode de réalisation, l'intérieur du dispositif est configuré pour être mis en dépression lorsque le bouchon est à sa position d'obturation.

Selon un mode de réalisation, le dispositif comprend un filtre disposé dans le canal entre le bouchon et la sortie de dispositif.

L'invention a également pour objet un ensemble de fourniture d'huile , comprenant un réservoir d'huile présentant une entrée de réservoir et au moins un dispositif tel que décrit ci-dessus, la sortie de dispositif étant raccordée à l'entrée de réservoir.

L'invention a également pour objet une turbomachine comprenant un ensemble de fourniture d'huile tel que décrit ci-dessus.

L'invention a également pour objet un aéronef comprenant au moins une turbomachine telle que décrite ci-dessus.

L'invention a en outre pour objet un procédé d'utilisation d'un dispositif tel que décrit ci-dessus, comprenant les étapes suivantes :
- obturation de l'entrée de dispositif par le bouchon à sa position d'obturation ;
- appui du levier sur la saille ;
- pivotage du levier autour de la saillie entre la position de contact de saillie et la position de levage, le levier déplaçant le bouchon de sa position d'obturation à sa position de mise à l'air pendant ce pivotage ; et
- entrée du fluide dans le dispositif au travers de l'entrée de dispositif.

Les avantages mentionnés pour le dispositif s'appliquent mutatis mutandis à la méthode.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1 est une vue schématique d'une entrée d'un réservoir d'huile avec un dispositif selon l'invention monté sur l'entrée de réservoir,
- la figure 2 est une vue en coupe schématique d'un dispositif selon l'invention, avec le bouchon dans la position d'obturation, et le levier dans la position de repos,
- la figure 3 est une vue en coupe schématique d'un dispositif selon l'invention, avec le bouchon dans la position d'obturation, et le levier dans une position intermédiaire entre la position de repos et la position de contact de saillie,
- la figure 4 est une vue en coupe schématique d'un dispositif selon l'invention, avec le bouchon dans la position d'obturation, et le levier dans la position de contact de saillie, et
- la figure 5 est une vue en coupe schématique d'un dispositif selon l'invention, avec le bouchon dans la position de mise à l'air, et le levier dans la position de levage.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants. En outre, les fonctions décrites peuvent être réalisées par d'autres structures que celles décrites dans le présent document.

Dans le contexte du présent document, les termes « premier » et « deuxième » servent uniquement à différencier les différents éléments et n'impliquent pas d'ordre entre ces éléments.

Sur les figures, les éléments identiques ou analogues peuvent porter les mêmes références.

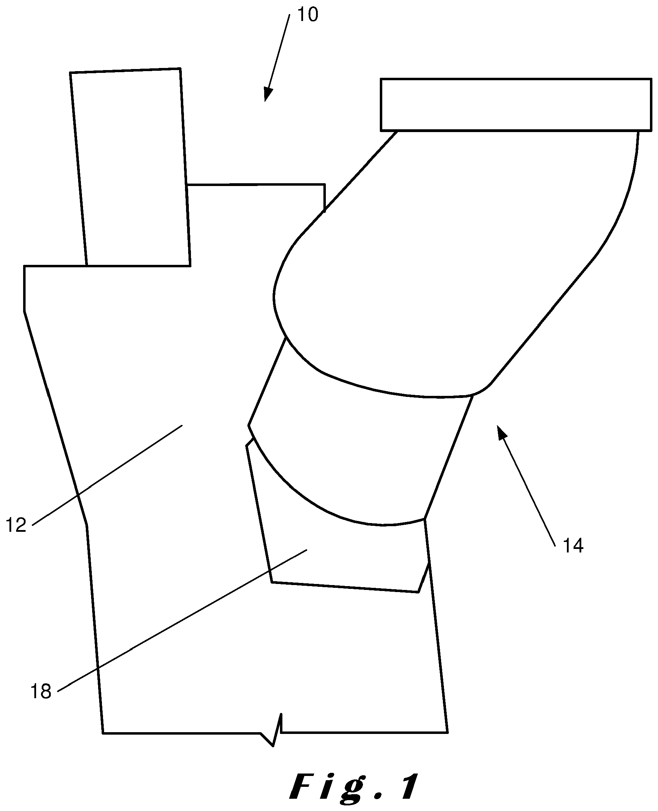

La figure 1 représente un ensemble de fourniture 10 d'huile. L'ensemble de fourniture 10 d'huile comprend un réservoir d'huile 12 et au moins un dispositif 14 monté sur le réservoir d'huile 12.

Le réservoir d'huile 12 présente une entrée de réservoir 18. Le dispositif 14 est raccordé à l'entrée de réservoir 18.

Le dispositif 14 selon l'invention est en particulier un adaptateur monté sur un réservoir d'huile. L'adaptateur est notamment configuré pour guider de l'huile à partir d'un récipient externe qui contient de l'huile vers le réservoir d'huile lors du versement de l'huile.

L'ensemble de fourniture 10 appartient par exemple à une turbomachine. Une telle turbomachine est typiquement montée sur un aéronef, par exemple un avion civil ou militaire.

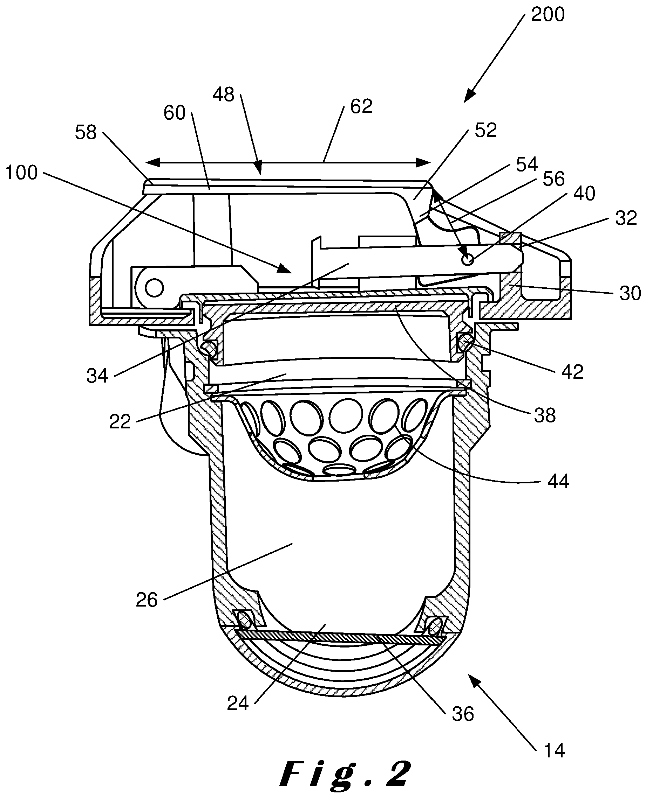

La figure 2 illustre le dispositif 14 fermé. Les figures 2 à 5 montrent des étapes successives d'une ouverture du dispositif 14.

Le dispositif 14 comprend une entrée de dispositif 22, une sortie de dispositif 24, et un canal 26 situé entre l'entrée de dispositif 22 et la sortie de dispositif 24. La sortie de dispositif 24 est raccordée à l'entrée de réservoir 18.

L'entrée de dispositif 22 présente par exemple une forme circulaire. Selon un mode de réalisation, elle présente une aire comprise entre 5 cm² et 80 cm², et avantageusement sensiblement égale à 20 cm²..

L'entrée de dispositif 22 comprend une saillie 30 hors du canal 26. Selon le mode de réalisation représenté sur les figures 2 à 5, la saillie 30 s'étend sensiblement parallèle au canal 26 et s'étend de façon opposée à la sortie de dispositif 24 par rapport à l'entrée de dispositif 22.

Avantageusement, la saillie 30 comprend un orifice 32 configuré pour recevoir un axe de fermeture 34, comme il sera décrit plus bas.

Avantageusement, la sortie de dispositif 24 comprend une membrane d'étanchéité 36 configurée pour obturer au moins partiellement le canal 26. La membrane d'étanchéité 36 est destinée à assurer l'étanchéité du dispositif 14 lorsqu'une fuite indésirable apparaît autour du bouchon 38. Dans ce cas, la membrane d'étanchéité 36 est plaquée contre la sortie du dispositif 24 par la pression interne du réservoir d'huile 12.

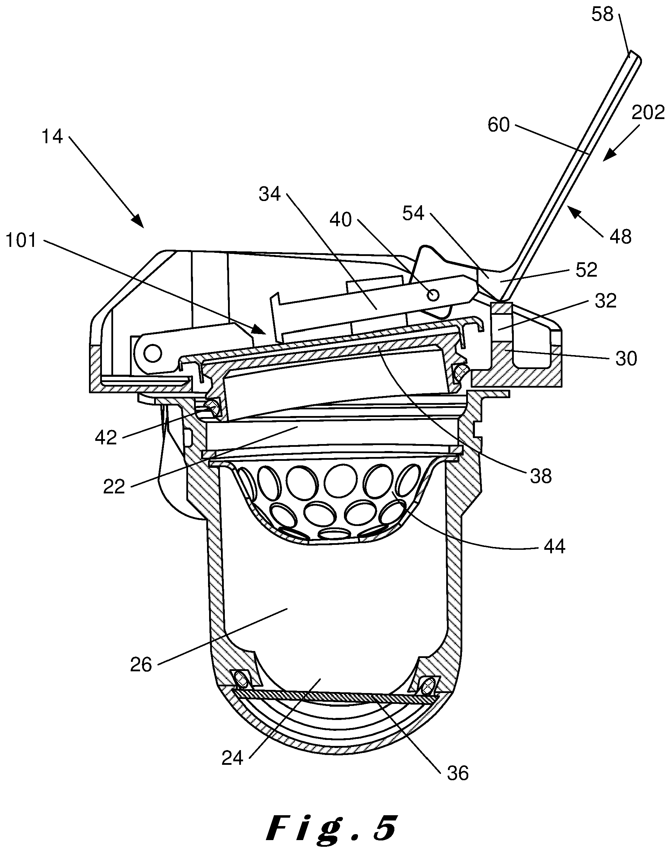

Le dispositif 14 comprend également un bouchon 38. Le bouchon 38 est monté mobile sur l'entrée de dispositif 22. Le bouchon 38 est configuré pour prendre une position de mise à l'air 101 (illustrée sur la figure 5) dans laquelle du fluide (en particulier de l'air) est apte à entrer dans le canal 26 au travers de l'entrée de dispositif 22, et une position d'obturation 100 (illustrée sur les figures 2 à 4) dans laquelle le bouchon 38 obture totalement l'entrée de dispositif 22.

Avantageusement, le bouchon 38 est en outre apte à se déplacer à une position ouverte qui est au-delà de sa position de mise à l'air. Dans la position ouverte le bouchon 38 est totalement à l'écart de l'entrée de dispositif 22. Selon un mode de réalisation, le bouchon 38 à sa position ouverte est en butée contre un bord entourant l'entrée de dispositif 22 de sorte que le bouchon 38 est maintenu dans la position ouverte sans intervention d'un utilisateur. La position ouverte du bouchon 38 permet à l'utilisateur de verser de l'huile au travers de la totalité de la section de l'entrée du dispositif 22.

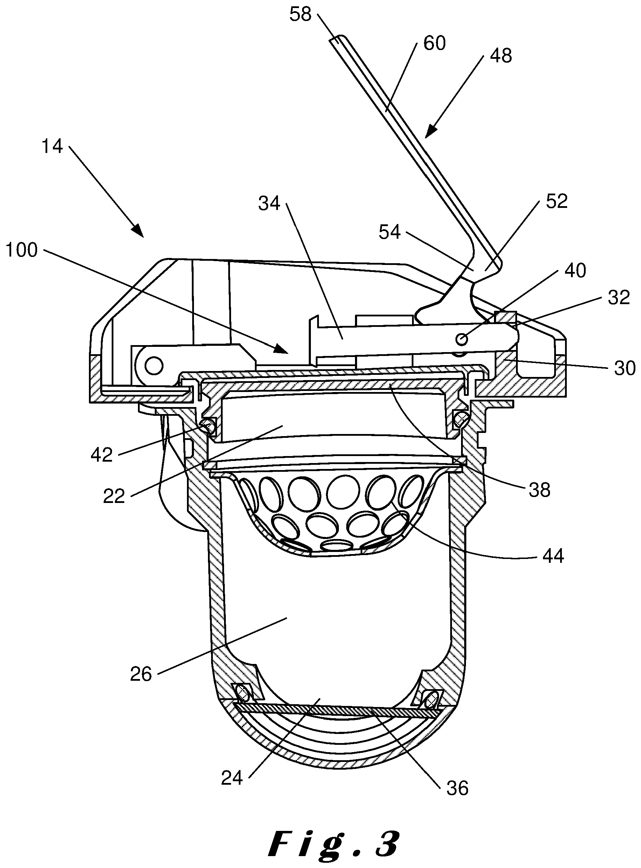

Selon le mode de réalisation représenté sur les figures, le bouchon 38 comprend un axe de fermeture 34. L'axe de fermeture 34 est déplaçable. Selon le mode de réalisation représenté sur les figures, l'axe de fermeture 34 est déplaçable sensiblement perpendiculairement au canal 26. L'axe de fermeture 34 est apte à entrer dans l'orifice 32, comme représenté sur les figures 2 et 3, de sorte à bloquer le bouchon 38 dans sa position d'obturation 100.

Selon un mode de réalisation, l'axe de fermeture 34 comprend un pivot de levier 40.

Avantageusement, le bouchon 38 comprend un joint d'étanchéité 42 destiné à entrer en contact avec le canal 26 lorsque le bouchon 38 occupe sa position d'obturation 100. Le joint d'étanchéité 42 permet au bouchon 38 de mieux isoler le canal 26 lorsque le bouchon 38 occupe sa position d'obturation 100.

Lorsque le bouchon 38 est à sa position d'obturation 100, l'intérieur du dispositif 14 est mis en dépression lors d'un vol. Lors de la montée en altitude ainsi que pendant la phase de vol à l'altitude maximal, l'intérieur du dispositif 14 sera en surpression par rapport à la pression atmosphérique. Lors de la descente, la pression dans l'intérieur du dispositif 14 restera à la pression minimale atteinte en altitude. Lors du retour au sol, la pression dans l'intérieur du dispositif 14 peut dans certains cas être inférieure à la pression atmosphérique, ce qui génère la dépression devant être vaincue lors de l'ouverture du bouchon 38. Selon un mode de réalisation, l'intérieur du dispositif présente une pression inférieure à 0,95 bar lorsque le bouchon 38 est à sa position d'obturation 100, ou inférieure à 0,92 bar, ou encore inférieure à 0,9 bar.

Avantageusement, le dispositif 14 comprend un filtre 44 disposé dans le canal 26 entre le bouchon 38 et la sortie de dispositif 24. Le filtre 44 est apte à retenir des particules présentant une dimension supérieure à 8 mm, avantageusement supérieure à 6 mm afin de les empêcher de traverser le canal 26.

Selon le mode de réalisation représenté sur les figures, le filtre 44 présente une forme sensiblement hémisphérique avec son dôme s'étendant à l'écart du bouchon 38. Cette forme est particulièrement adaptée pour empêcher des particules venant de l'entrée de dispositif 22 d'atteindre la sortie de dispositif 24.

Le dispositif 14 comprend également un levier 48 raccordé au bouchon 38. Selon le mode de réalisation représenté sur les figures, le levier 48 est raccordé au bouchon 38 par le pivot de levier 40.

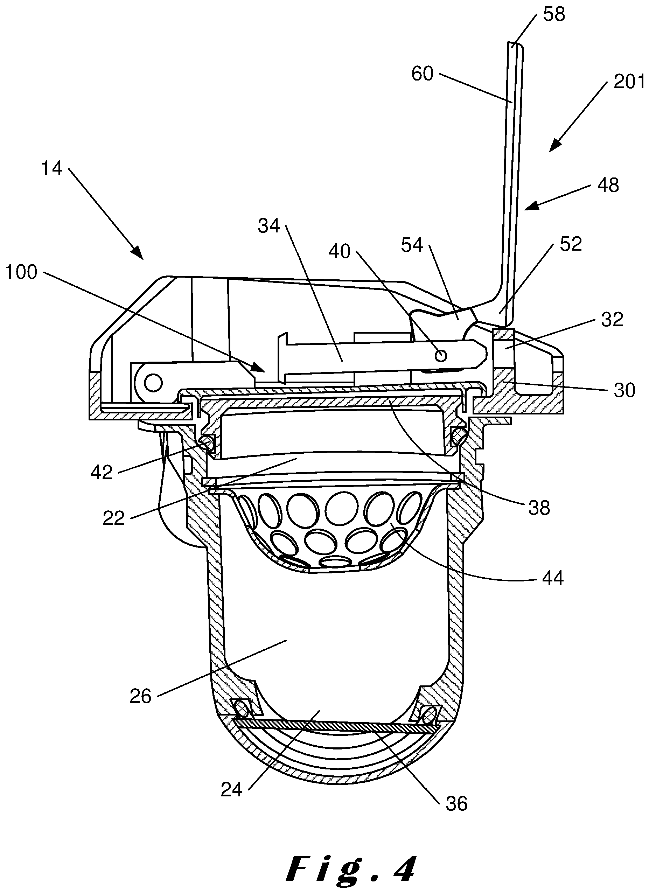

La figure 2 montre le levier 48 à sa position de repos 200; la figure 4 montre le levier 48 à sa position de contact de saillie 201 ; et la figure 5 montre le levier 48 à sa position de levage 202.

Le levier 48 comprend un coude d'appui 52 apte à entrer en appui sur la saillie 30. Le levier 48 comprend un bras court 54 s'étendant entre le coude d'appui 52 et le pivot de levier 40, et ayant une première longueur 56.

Le levier 48 présente une extrémité de levier 58 libre et opposée au coude d'appui 52. Elle est prévue pour qu'un utilisateur y exerce une force pour ouvrir le dispositif 14. Le levier 48 comprend un bras long 60 s'étendant entre le coude d'appui 52 et l'extrémité de levier 58, et ayant une deuxième longueur 62. Cette deuxième longueur 62 est au moins trois fois, préférentiellement cinq fois, supérieure à la première longueur 56 du bras court 54. Autrement dit, le levier 48 présente un avantage mécanique supérieur à 3, de préférence supérieur à 5.

En référence aux figures 2 à 4, le levier 48 est apte à pivoter autour du pivot de levier 40 entre une position de repos 200 (représentée sur la figure 2) et une position de contact de saillie 201 (représentée sur la figure 4). Le levier 48 est apte à occuper une pluralité de positions intermédiaires (dont une est illustrés sur la figure 3) entre sa position de repos 200 et sa position de contact de saillie 201. Lorsque le levier 48 occupe la position de repos 200, le levier 48, en particulier le coude d'appui 52, est à l'écart de la saillie 30. Lorsque le levier 48 occupe la position de repos 200, le bouchon 38 est à la position d'obturation 100. Lorsque le levier 48 occupe sa position de repos 200, l'axe de fermeture 34 est inséré dans l'orifice 32. Ainsi, un mouvement potentiel du bouchon 38 de sa position d'obturation 100 à sa position de mise à l'air 101 est empêché par la coopération de l'axe de fermeture 34 avec l'orifice 32.

Avantageusement, le dispositif 14 comprend un ressort (non-représenté sur les figures) configuré pour maintenir le levier 48 à sa position de repos lorsque la force de pivotement exercée sur le levier 48 est inférieure à un seuil. Le ressort est par exemple disposé entre le bouchon 38 et l'axe de fermeture 34.

La rotation du levier 48 de sa position de repos 200 à sa position de contact de saillie 201 retire l'axe de fermeture 34 progressivement de l'orifice 32.

Lorsque le levier 48 occupe la position de contact de saillie 201, le levier 48 est en contact avec la saillie 30. Selon le mode de réalisation représenté sur les figures, lorsque le levier 48 occupe la position de contact de saillie 201, le coude d'appui 52 est en contact avec la saillie 30.

Lorsque le levier 48 occupe la position de contact de saillie 201, le bouchon 38 est dans la position d'obturation 100. Ainsi, pendant le déplacement du levier 48 entre sa position de repos 200 et sa position de contact de saillie 201, le bouchon 38 reste toujours dans la position d'obturation 100.

Lorsque le levier 48 occupe sa position de contact de saillie 201, l'axe de fermeture 34 est à l'écart de l'orifice 32.

En référence aux figures 4 et 5, après que le levier 48 entre en contact avec la saillie 30, le levier 48 est apte à pivoter autour de la saillie 30 entre la position de contact de saillie 201 (représentée sur la figure 4) et une position de levage 202 (représentée sur la figure 5).

Lorsque le levier 48 occupe sa position de levage 202, le bouchon 38 est dans la position de mise à l'air 101. Pendant le pivotage du levier 48 de la position de contact de saillie 201 à la position de levage 202, le levier 48 déplace le bouchon 38 de sa position d'obturation 100 à sa position de mise à l'air 101.

Le procédé d'utilisation du dispositif 14 sera maintenant brièvement décrit.

Tout d'abord, comme illustré sur la figure 2, le bouchon 38 occupe sa position d'obturation 100, et le levier 48 est à la position de repos 200. L'axe de fermeture 34 est inséré dans l'orifice 32. L'entrée de dispositif 22 est obturée par le bouchon 38 de sorte qu'aucun fluide n'est apte à entrer dans ou sortir du canal 26.

Lorsqu'un utilisateur souhaite changer le bouchon 38 à sa position de mise à l'air 101, il pivote le levier 48 autour du pivot de levier 40. Le levier 48 passe parmi les positions intermédiaires avant d'arriver à sa position de contact de saillie 201. Pendant ce pivotage du levier 48 entre sa position de repos 200 et sa position de contact de saillie 201, l'axe de fermeture 34 sort progressivement de l'orifice 32.

La force de résistance pendant le pivotage du levier 40 entre sa position de repos 200 et sa position de contact de saillie 201 est principalement la friction entre le levier 48 et l'axe de fermeture 34 à la position du pivot de levier 40, et la friction entre l'axe de fermeture 34 et l'orifice 32.

Selon le mode de réalisation où le dispositif 14 comprend le ressort tel que décrit en haut, la force de résistance pendant le pivotage du levier 40 de sa position de repos 200 à sa position de contact de saillie 201 comprend en outre la force de rappel sur le levier 48 vers sa position de repos.

Une fois que le levier 48 atteint sa position de contact de saillie 201, le coude d'appui 52 s'appuie sur la saillie 30. Pour continuer le pivotage du levier 48 de la position de contact de saillie 201 vers la position de levage 202, l'utilisateur exerce une force sur le levier 48, avantageusement sur l'extrémité de levier 58, pour contrer la force de résistance. La force de résistance pendant le pivotage du levier 48 entre sa position de contact de saillie 201 et sa position de levage 202 est principalement la dépression à l'intérieur du dispositif 14 par rapport à l'extérieur du dispositif 14. La force liée à cette dépression est plus élevée par rapport à la friction sur le levier 48 pendant le pivotage du levier 40 entre sa position de repos 200 et sa position de contact de saillie 201. Grâce à l'utilisation du levier 48, la force nécessaire pour ouvrir le bouchon 38 est beaucoup plus petite par rapport à quand on ouvre le bouchon 38 directement sans utiliser le levier 48.

Lorsque le levier 40 pivote de sa position de contact de saillie 201 vers sa position de levage 202, le levier 48 déplace progressivement le bouchon 38 de sa position d'obturation 100 à sa position de mise à l'air 101.

Une fois que le bouchon atteint sa position de mise à l'air 101, du fluide (en particulier de l'air) est apte à entrer dans le dispositif 14 au travers de l'entrée de dispositif 22.

Avantageusement, pour verser de l'huile au travers le canal 26 l'utilisateur continue à piloter le levier 48 de sa position de mise à l'air à sa position ouverte, en par exemple tirant le levier 48. Selon un mode de réalisation, le levier 48 est en contact avec le bouchon 38 pendant au moins une partie du pivotage du levier 48 entre sa position de mise à l'air et sa position ouverte.

En d'autres termes, l'invention se rapporte à un adaptateur disposé sur l'entrée d'un réservoir d'huile 12 de moteur d'aéronef. L'adaptateur comprend un bouchon 38 entre l'adaptateur et l'extérieur, et un « flapper » entre l'adaptateur et le réservoir d'huile. Une cavité adaptateur 26, située entre eux, est mise en dépression lors des vols. Lorsque l'aéronef est de retour au sol, il faut contrer cette dépression pour ouvrir le bouchon, ce qui peut rendre l'opération d'ouverture difficile. L'invention propose, grâce à un levier 48, de contrer la dépression dans la cavité de l'adaptateur, et de permettre une ouverture de bouchon facile avec une force limitée.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Dispositif (14) apte à être monté sur un réservoir d'huile (12) d'une turbomachine d'aéronef, comprenant :
• un canal (26) situé entre une entrée de dispositif (22) et une sortie de dispositif (24), la sortie de dispositif (24) étant destinée à être raccordée au réservoir d'huile (12),
• un bouchon (38) monté mobile sur l'entrée de dispositif (22) et configuré pour prendre :
∘ une position de mise à l'air (101) dans laquelle du fluide est apte à entrer dans le canal (26) au travers de l'entrée de dispositif (22), et
∘ une position d'obturation (100) dans laquelle le bouchon (38) obture totalement l'entrée de dispositif (22) ;
**caractérisé en ce que** l'entrée de dispositif (22) comprend une saillie (30) et **en ce que** le dispositif (14) comprend un levier (48) raccordé au bouchon (38) ;
le levier (48) comprenant un coude d'appui (52) apte à entrer en appui sur la saillie (30) et pivoter autour de la saillie (30) entre une position de contact de saillie (201) et une position de levage (202) ;
le bouchon (38) étant dans la position d'obturation (100) lorsque le levier (48) occupe sa position de contact de saillie (201),
le bouchon (38) étant dans la position de mise à l'air (101) lorsque le levier (48) occupe sa position de levage (202) ; et
le levier (48) déplaçant le bouchon (38) de sa position d'obturation (100) à sa position de mise à l'air (101) pendant son pivotage de la position de contact de saillie (201) à la position de levage (202).

2. Dispositif (14) selon la revendication 1, dans lequel le levier (48) est déplaçable entre une position de repos (200) et la position de contact de saillie (201), le levier (48) étant à l'écart de la saillie lorsqu'il occupe la position de repos (200), le bouchon (38) étant à la position d'obturation lorsque le levier (48) occupe la position de repos (200).

3. Dispositif (14) selon la revendication précédente, dans lequel la saillie (30) comprend un orifice (32), et le bouchon (38) comprend un axe de fermeture (34) apte à entrer dans l'orifice (32) de sorte à bloquer le bouchon (38) à sa position d'obturation (100) ;
lorsque le levier (48) occupe sa position de repos (200), l'axe de fermeture (34) étant insérée dans l'orifice (32) ;
lorsque le levier (48) occupe sa position de contact de saillie (201), l'axe de fermeture (34) étant à l'écart de l'orifice (32) ; et
la rotation du levier (48) de sa position de repos (200) à sa position de contact de saillie (201) étant configurée pour retirer l'axe de fermeture (34) de l'orifice (32).

4. Dispositif (14) selon la revendication précédente, dans lequel le levier (48) est fixé sur l'axe de fermeture (34) par un pivot de levier (40), le levier (48) étant apte à pivoter autour du pivot de levier (40) entre ses positions de repos (200) et de contact de saillie (201).

5. Dispositif (14) selon la revendication précédente, dans lequel le levier (48) comprend un bras court (54) s'étendant entre le coude d'appui (52) et le pivot de levier (40), le bras court (54) ayant une première longueur (56), et un bras long (60) formant poignée et s'étendant sur une deuxième longueur (62) à partir du coude d'appui (52), la deuxième longueur (62) étant au moins trois fois plus grande, avantageusement cinq fois plus grande, que la première longueur (56) entre le coude d'appui (52) et le pivot de levier (40).

6. Dispositif (14) selon l'une quelconque des revendications précédentes, dans lequel l'intérieur du dispositif (14) est configuré pour être mis en dépression lorsque le bouchon (38) est à sa position d'obturation (100).

7. Dispositif (14) selon l'une quelconque des revendications précédentes, comprenant un filtre (44) disposé dans le canal (26) entre le bouchon (38) et la sortie de dispositif (24).

8. Ensemble de fourniture (10) d'huile, comprenant un réservoir d'huile (12) présentant une entrée de réservoir (18) et au moins un dispositif (14) selon l'une quelconque des revendications précédentes,
la sortie de dispositif (24) étant raccordée à l'entrée de réservoir (18).

9. Turbomachine comprenant un ensemble de fourniture (10) d'huile selon la revendication précédente.

10. Aéronef comprenant au moins une turbomachine selon la revendication précédente.

11. Procédé d'utilisation d'un dispositif (14) selon l'une quelconque des revendications 1 à 7, comprenant les étapes suivantes :
- obturation de l'entrée de dispositif (22) par le bouchon (38) à sa position d'obturation (100) ;
- appui du levier (48) sur la saille (30) ;
- pivotage du levier (48) autour de la saillie (30) entre la position de contact de saillie (201) et la position de levage (202), le levier (48) déplaçant le bouchon (38) de sa position d'obturation (100) à sa position de mise à l'air (101) pendant ce pivotage ; et
- entrée du fluide dans le dispositif (14) au travers de l'entrée de dispositif (22).

## Patentansprüche

1. Vorrichtung (14), die imstande ist, auf einem Öltank (12) eines Turbotriebwerks eines Flugzeugs montiert zu werden, umfassend:
- einen Kanal (26), der zwischen einem Vorrichtungseingang (22) und einem Vorrichtungsausgang (24) befindet, wobei der Vorrichtungsausgang (24) dazu bestimmt ist, an den Öltank (12) angeschlossen zu werden,
- einen Stopfen (38), der beweglich auf dem Vorrichtungseingang (22) montiert ist, und konfiguriert ist, um einzunehmen:
- eine Entlüftungsposition (101), in der die Flüssigkeit imstande ist, durch den Vorrichtungseingang (22) hindurch in den Kanal (26) einzutreten, und
- eine Verschlussposition (100), in welcher der Stopfen (38) den Vorrichtungseingang (22) vollständig verschließt;
**dadurch gekennzeichnet, dass** der Vorrichtungseingang (22) einen Vorsprung (30) umfasst, und dadurch, dass die Vorrichtung (14) einen Hebel (48) umfasst, der an den Stopfen (38) angeschlossen ist;
wobei der Hebel (48) einen Abstützbogen (52) umfasst, der imstande ist, sich am Vorsprung (30) abzustützen und um den Vorsprung (30) herum zwischen einer Vorsprungkontaktposition (201) und einer Hubposition (202) zu schwenken;
wobei der Stopfen (38) in der Verschlussposition (100) ist, wenn der Hebel (48) seine Vorsprungkontaktposition (201) einnimmt,
wobei der Stopfen (38) in der Entlüftungsposition (101) ist, wenn der Hebel (48) seine Hubposition (202) einnimmt; und
wobei der Hebel (48) den Stopfen (38) während seines Schwenks von der Vorsprungkontaktposition (201) in die Hubposition (202) von seiner Verschlussposition (100) in seine Entlüftungsposition (101) umsetzt.

2. Vorrichtung (14) nach Anspruch 1, wobei der Hebel (48) zwischen einer Ruheposition (200) und der Vorsprungkontaktposition (201) umsetzbar ist, wobei der Hebel (48) vom Vorsprung entfernt ist, wenn er die Ruheposition (200) einnimmt, wobei der Stopfen (38) in der Verschlussposition ist, wenn der Hebel (48) die Ruheposition (200) einnimmt.

3. Vorrichtung (14) nach dem vorstehenden Anspruch, wobei der Vorsprung (30) eine Öffnung (32) umfasst, und der Stopfen (38) eine Schließachse (34) umfasst, die imstande ist, in die Öffnung (32) einzutreten, um den Stopfen (38) in seiner Verschlussposition (100) zu blockieren;
wenn der Hebel (48) seine Ruheposition (200) einnimmt, wobei die Schließachse (34) in die Öffnung (32) eingeführt wird;
wenn der Hebel (48) seine Vorsprungkontaktposition (201) einnimmt, wobei die Schließachse (34) von der Öffnung (32) entfernt ist;
wobei die Drehung des Hebels (48) von seiner Ruheposition (200) in seine Vorsprungkontaktposition (201) konfiguriert ist, um die Schließachse (34) aus der Öffnung (32) zurückzuziehen.

4. Vorrichtung (14) nach dem vorstehenden Anspruch, wobei der Hebel (48) durch einen Hebeldrehzapfen (40) auf der Schließachse (34) fixiert ist, wobei der Hebel (48) imstande ist, zwischen seiner Ruheposition (200) und der Vorsprungkontaktposition (201) um den Hebeldrehzapfen (40) zu schwenken.

5. Vorrichtung (14) nach dem vorstehenden Anspruch, wobei der Hebel (48) einen kurzen Arm (54), der sich zwischen dem Abstützbogen (52) und dem Hebeldrehzapfen (40) erstreckt, wobei der kurze Arm (54) eine erste Länge (56) aufweist, und einen langen Arm (60) umfasst, der einen Griff bildet, und sich über eine zweite Länge (62) ab dem Abstützbogen (52) erstreckt, wobei die zweite Länge (62) mindestens dreimal größer, vorteilhafterweise fünfmal größer als die erste Länge (56) zwischen dem Abstützbogen (52) und dem Hebeldrehzapfen (40) ist.

6. Vorrichtung (14) nach einem der vorstehenden Ansprüche, wobei das Innere der Vorrichtung (14) konfiguriert ist, um mit Unterdruck beaufschlagt zu werden, wenn der Stopfen (38) in seiner Verschlussposition (100) ist.

7. Vorrichtung (14) nach einem der vorstehenden Ansprüche, umfassend einen Filter (44), der im Kanal (26) zwischen dem Stopfen (38) und dem Vorrichtungsausgang (24) angeordnet ist.

8. Ölversorgungsanordnung (10), umfassend einen Öltank (12), der einen Tankeingang (18) und mindestens eine Vorrichtung (14) nach einem der vorstehenden Ansprüche aufweist,
wobei der Vorrichtungsausgang (24) an den Tankeingang (18) angeschlossen ist.

9. Turbotriebwerk, umfassend eine Ölversorgungsanordnung (10) nach dem vorstehenden Anspruch.

10. Luftfahrzeug, umfassend mindestens ein Turbotriebwerk nach dem vorstehenden Anspruch.

11. Verfahren zur Verwendung einer Vorrichtung (14) nach einem der Ansprüche 1 bis 7, die folgenden Schritte umfassend:
- Verschließen des Vorrichtungseingangs (22) mit dem Stopfen (38) in dessen Verschlussposition (100);
- Abstützen des Hebels (48) auf dem Vorsprung (30);
- Schwenken des Hebels (48) um den Vorsprung (30) herum zwischen der Vorsprungkontaktposition (201) und der Hubposition (202), wobei der Hebel (48) den Stopfen (38) während dieses Schwenks von seiner Verschlussposition (100) in seine Entlüftungsposition (101) umsetzt; und
- Eintritt der Flüssigkeit durch den Vorrichtungseingang (22) hindurch in die Vorrichtung (14).

## Claims

1. Device (14) able to be mounted on an oil reservoir (12) of an aircraft turbomachine, comprising:
• a channel (26) located between a device inlet (22) and a device outlet (24), the device outlet (24) intended to be connected to the oil reservoir (12),
• a stopper (38) movably mounted on the device inlet (22) and configured to take:
∘ a venting position (101) wherein fluid is able to enter into the channel (26) through the device inlet (22), and
∘ an obstructed position (100) wherein the stopper (38) completely obstructs the device inlet (22);
**characterized in that** the device inlet (22) comprises a protrusion (30) and **in that** the device (14) comprises a lever (48) connected to the stopper (38);
the lever (48) comprising a bearing elbow (52) able to bear against the protrusion (30) and pivot about the protrusion (30) between a protrusion contact position (201) and a lifting position (202);
the stopper (38) being in the obstructed position (100) when the lever (48) occupies its protrusion contact position (201),
the stopper (38) being in the venting position (101) when the lever (48) occupies its lifting position (202); and
the lever (48) displacing the stopper (38) from its obstructed position (100) to its venting position (101) during its pivoting from the protrusion contact position (201) to the lifting position (202).

2. Device (14) according to claim 1, wherein the lever (48) can be displaced between an idle position (200) and the protrusion contact position (201), the lever (48) being separated from the protrusion when it occupies the idle position (200), the stopper (38) being in the obstructed position when the lever (48) occupies the idle position (200).

3. Device (14) according to the preceding claim, wherein the protrusion (30) comprises an orifice (32), and the stopper (38) comprises a closing axis (34) able to enter into the orifice (32) in such a way as to block the stopper (38) in its obstructed position (100);
when the lever (48) occupies its idle position (200), the closing axis (34) being inserted into the orifice (32);
when the lever (48) occupies its protrusion contact position (201), the closing axis (34) being separated from the orifice (32); and
the rotation of the lever (48) from its idle position (200) to its protrusion contact position (201) being configured to withdraw the closing axis (34) from the orifice (32).

4. Device (14) according to the preceding claim, wherein the lever (48) is fixed on the closing axis (34) by a lever pivot (40), the lever (48) being able to pivot about the lever pivot (40) between its idle position (200) and protrusion contact position (201).

5. Device (14) according to the preceding claim, wherein the lever (48) comprises a short arm (54) extending between the bearing elbow (52) and the lever pivot (40), the short arm (54) having a first length (56), and a long arm (60) forming a handle and extending over a second length (62) starting from the bearing elbow (52), the second length (62) being at least three times larger, advantageously five times larger, than the first length (56) between the bearing elbow (52) and the lever pivot (40).

6. Device (14) according to any of the preceding claims, wherein the interior of the device (14) is configured to be depressurized when the stopper (38) is in its obstructed position (100).

7. Device (14) according to any of the preceding claims, comprising a filter (44) arranged in the channel (26) between the stopper (38) and the device outlet (24).

8. Oil supply assembly (10), comprising an oil reservoir (12) having a reservoir inlet (18) and at least one device (14) according to any of the preceding claims,
the device outlet (24) being connected to the reservoir inlet (18).

9. Turbomachine comprising an oil supply assembly (10) according to the preceding claim.

10. Aircraft comprising at least one turbomachine according to the preceding claim.

11. Method of using a device (14) according to any of claims 1 to 7, comprising the following steps:
- obstructing of the device inlet (22) by the stopper (38) in its obstructed position (100);
- bearing of the lever (48) on the protrusion (30);
- pivoting of the lever (48) about the protrusion (30) between the protrusion contact position (201) and the lifting position (202), the lever (48) displacing the stopper (38) from its obstructed position (100) to its venting position (101) during this pivoting; and
- entry of the fluid into the device (14) through the device inlet (22).
